# FASCICULE DE BREVET EUROPEEN

(11) **EP 0 946 860 B1**
(45) Date de publication et mention de la délivrance du brevet: **25.09.2002**
(21) Numéro de dépôt: 97952084.8
(22) Date de dépôt: 17.12.1997
(51) Int. Cl.: G01F 1/06, G01F 1/05

(54) **COMPTEUR DE LIQUIDE A PIVOTAGE AMELIORE**
FLÜSSIGKEITSZÄHLER MIT VERBESSERTER SCHWENKUNG
WATER METER WITH IMPROVED PIVOTING

(30) Priorité: 19.12.1996 FR 9615820
(43) Date de publication de la demande: 06.10.1999
(73) Titulaire: SCHLUMBERGER INDUSTRIES, 92120 Montrouge (FR)
(72) Inventeur: DUCATE, Ludovic, F-01570 Manziat (FR); CATHERIN, Daniel, F-01570 Manziat (FR)
(74) Mandataire: Feray, Valérie
(86) Numéro de dépôt international: FR9702326
(87) Numéro de publication internationale: WO98027407

(56) Documents cités:
- EP-A- 0 261 529
- EP-A- 0 512 325
- EP-A- 0 682 234
- EP-A- 0 764 832
- JP-A- 7 103 794
- US-A- 4 903 533

## Description

L'invention est relative à un compteur de liquide comprenant une chambre de mesure dans laquelle une turbine est animée d'un mouvement de rotation autour d'un axe et pivote, au moins pour les faibles débits de liquide, sur un appui aligné avec ledit axe.

On connaît des compteurs de liquides de ce type qui sont par exemple décrits dans les documents GB 437 637 et FR 2 336 666.

Dans ces compteurs le mouvement de pivotage de la turbine à axe vertical est classiquement réalisé au moyen d'une pointe conique fine liée à l'appui, comme dans le document GB 437 637, ou liée à l'axe de la turbine, ainsi que décrit dans le document FR 2 336 666, et en contact avec une surface plane ou concave liée à la turbine (GB 437 637) ou à l'appui (FR 2 336 666).

Le contact entre la pointe conique et la surface plane ou concave est un contact quasi-ponctuel qui permet de réduire les frottements mécaniques lors du mouvement de pivotage de la turbine sur son appui et donc de conférer au compteur de liquide une bonne sensibilité.

Dans le compteur d'eau décrit dans le document FR 2 336 666, il est prévu que la turbine se soulève à partir d'un certain débit ce qui a pour effet d'écarter la pointe conique de la surface plane ou concave et donc de réduire les risques d'usure de la pointe.

En effet, en écartant la pointe conique de la surface, on évite que le contact ponctuel ne se transforme en contact surfacique et provoque une augmentation des frottements lors du pivotage.

Par ailleurs, les documents EP-A-0 261 529, US-A-4 903 533, EP-A-0 764 832 A et JP-A-07103794, décrivent des compteurs dans lesquels le mouvement de pivotage de la turbine à axe vertical est réalisé au moyen d'une bille fixe maintenue et liée à la turbine, et en contact avec une surface plane ou concave liée à l'appui. Néanmoins, dans tous ces dispositifs, la bille n'est pas libre en rotation et le pivotage s'effectue toujours sur le même point de contact. Ce contact permanent transforme inévitablement le contact ponctuel en un contact surfacique au fil du temps.

Il serait donc intéressant de trouver une solution au problème de l'usure de la pointe conique ou de la bille en contact avec une surface plane ou concave lorsque ce contact est amené à se prolonger dans le temps.

La présente invention vise à remédier à ce problème en proposant une solution de conception simple et qui est très efficace.

La présente invention a ainsi pour objet un compteur de liquide comprenant une chambre de mesure dans laquelle une turbine est animée d'un mouvement de rotation autour d'un axe et pivote, au moins pour les faibles débits de liquide, sur un appui aligné avec ledit axe, caractérisé en ce que le mouvement de pivotage s'effectue par l'intermédiaire d'une bille (46d) libre en rotation et libre de se mouvoir latéralement entre deux surfaces concaves (46c, 48a) de sorte que ladite bille se centre automatiquement, chaque surface concave ayant un rayon de courbure strictement supérieur à celui de la bille, l'une (48a) des surfaces concaves étant liée à la turbine (16) alors que l'autre surface (46c) est solidaire de l'appui (46a-d).

En proposant un contact ponctuel roulant entre la bille et chacune des surfaces concaves, on s'assure que ce ne sont pas les mêmes points qui sont en contact au cours du temps et donc que l'usure de la bille est fortement réduite par rapport à la pointe conique de l'art antérieur.

Même après un fonctionnement prolongé au cours duquel la turbine pivote sur son appui. le contact ponctuel est maintenu ce qui garantit le maintien de la sensibilité initiale du compteur.

En outre, le contact de la bille avec les deux surfaces concaves inférieure et supérieure assure l'autocentrage de la bille ce qui permet de recentrer la turbine par rapport à son appui et donc d'éviter des frottements latéraux lorsque la turbine est excentrée.

L'axe est par exemple vertical lorsque le compteur est disposé horizontalement.

Selon une autre caractéristique de l'invention, la limite supérieure des rayons de courbure des surfaces concaves est déterminée par le poids de la turbine dans le liquide de façon à ce que les rayons de courbure soient d'autant plus grands que le poids de la turbine dans le liquide est élevé.

L'autocentrage de la bille dépend en effet du poids de la turbine dans le liquide et des rayons de courbure des surfaces concaves.

Les surfaces concaves ont par exemple toutes les deux une forme sensiblement sphérique, parabolique ou elliptique.

Il peut même être envisagé que les formes des deux surfaces ne soient pas toutes les deux de même type.

Ainsi, par exemple, l'une des surfaces peut être sphérique alors que l'autre est elliptique.

Toutes les combinaisons sont envisageables par l'homme du métier.

Pour des raisons de simplicité, il est préférable de choisir le même rayon de courbure pour chacune des surfaces concaves mais ceci ne constitue nullement une obligation technique.

Selon que la densité moyenne de la turbine est supérieure ou inférieure à la densité du liquide, la bille est placée sous la turbine ou au dessus de celle-ci.

Dans l'un ou l'autre cas envisagé ci-dessus, un logement axial peut être prévu dans la turbine pour recevoir l'appui constitué de la bille et d'un pivot axial qui est muni, à une de ses extrémités qui pénètre dans ledit logement, d'une des surfaces concaves destinée à entrer en contact avec la bille, l'autre surface concave étant aménagée au fond dudit logement axial de la turbine.

Dans l'un ou l'autre cas envisagé ci-dessus, à titre de variante, il peut être prévu qu'un arbre axial solidaire de la turbine pénètre dans un logement axial au fond duquel est aménagée l'une des surfaces concaves, ledit arbre axial étant muni, à l'une de ses extrémités pénétrante, de l'autre surface concave, la bille étant disposée dans ledit logement entre ces surfaces.

D'autres caractéristiques et avantages apparaîtront au cours de la description qui va suivre donnée uniquement à titre d'exemple non limitatif, et faite en référence aux dessins annexés sur lesquels :
- la figure 1 est une vue schématique en coupe longitudinale d'une chambre de mesure d'un compteur d'eau selon l'invention,
- la figure 2a est une vue schématique agrandie de l'invention.
- la figure 2b est une vue schématique agrandie d'une pointe conique en contact avec une surface concave selon l'art antérieur après encrassement.
- la figure 2c est une vue schématique agrandie d'une variante de réalisation de l'invention,
- la figure 3 représente les courbes d'erreur en fonction du débit d'un compteur d'eau selon l'invention avant (courbe A) et après (courbe B) tests d'endurance effectués à un faible débit.

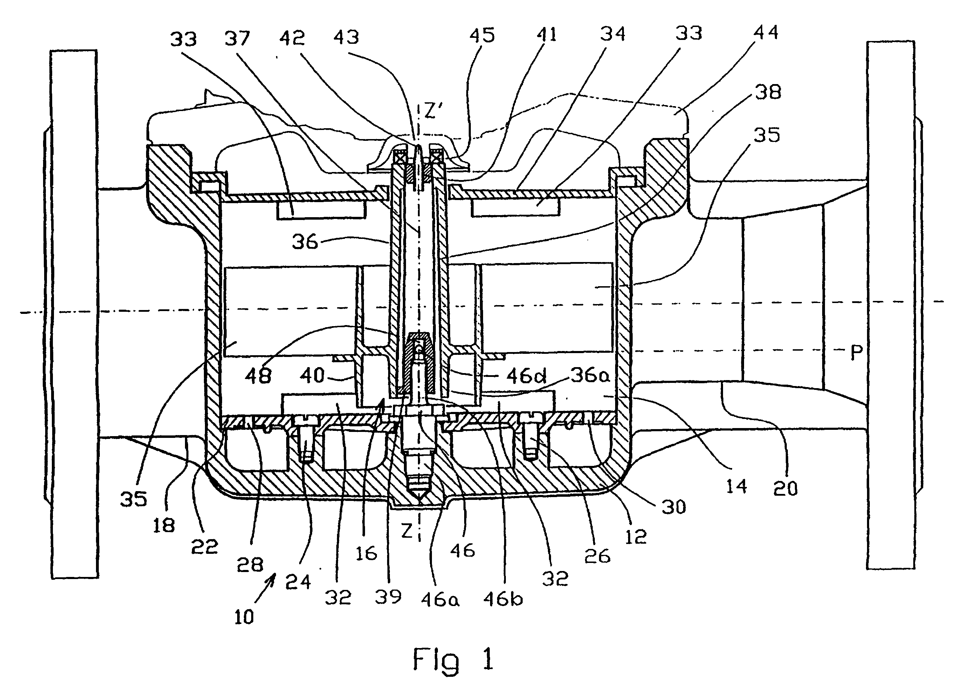

Comme représenté à la figure 1 et désigné par la référence générale notée 10, un compteur de liquide, par exemple d'eau, comprend une bâche 12 dans laquelle est installée une chambre de mesure 14 équipée d'une turbine 16 à axe vertical ZZ'.

Une amenée d'eau 18 et une évacuation d'eau 20 sont raccordées à la bâche 12 de part et d'autre de celle-ci et communiquent avec la chambre de mesure 14 afin respectivement d'amener l'écoulement d'eau dans ladite chambre en vue de mettre en rotation la turbine et d'évacuer ledit écoulement après son passage dans cette chambre de mesure.

L'amenée 18 et l'évacuation d'eau 20 ne sont pas représentées en coupe sur la figure 1 mais uniquement en arrière plan car elles sont décalées par rapport au centre de la chambre de mesure.

L'amenée de l'eau a par exemple un diamètre interne de 80mm suivi d'un diamètre interne réduit de 46mm.

L'évacuation d'eau 20 a par exemple un diamètre interne de 80mm. La chambre de mesure comprend dans sa partie basse une platine inférieure 22 fixée au moyen de vis 24, 26 au fond de la bâche 12 et qui est pourvue d'au moins deux orifices 28, 30 permettant d'égaliser les pressions de part et d'autre de celle-ci, par exemple lorsque des coups de bélier se produisent.

Plusieurs chicanes 32, par exemple au nombre de quatre disposées radialement à 90° l'une par rapport à l'autre, sont aménagées sur la plaque de pression 22.

Dans la partie supérieure de la chambre de mesure, il est également prévu de disposer quatre autres chicanes 33 sur la face inférieure d'une platine supérieure 34.

La turbine 16 comporte plusieurs pales 35, par exemple au nombre de sept, solidaires d'un moyeu central 36.

Une cavité interne sensiblement cylindrique 37 est prévue à l'intérieur du moyeu central et des nervures axiales 38 sont aménagées dans ladite cavité sur toute la hauteur dudit moyeu. Une pièce 39 formant palier est emmanchée dans la partie inférieure de ce moyeu. La partie inférieure centrale 36a du moyeu 36 est prolongée en direction de la plaque de pression 22 au delà du plan horizontal P qui délimite la partie basse des pales 35.

Le moyeu central 36 comprend également une partie 40 de forme sensiblement cylindrique creuse entourant la partie inférieure centrale 36a du moyeu et étant pourvue d'une base de forme annulaire située dans le plan P.

A sa partie supérieure, le moyeu 36 de la turbine 16 traverse la platine 34 et est guidé en rotation au moyen d'un axe 41 qui est engagé dans un logement 42 prévu dans une pièce en forme de capsule 43 montée au centre d'un plateau supérieur 44 venant en appui sur la bâche 12 et sur la platine 34. Au cours du mouvement ascendant de la turbine la partie supérieure de l'axe peut venir en butée au fond du logement 42 de la pièce 43.

Une partie 45 d'un système d'accouplement magnétique est aménagée à l'extrémité supérieure du moyeu 36 d'un côté de la pièce 44, l'autre partie de ce système étant disposée de l'autre côté de cette pièce 44. Le système d'accouplement magnétique sert à transmettre le mouvement de rotation de la turbine à la partie mécanique reliée au totalisateur du compteur et située de l'autre côté de la pièce 44. Le totalisateur n'est pas représenté sur la figure 1.

La turbine 16 est montée sur un appui axial 46 ayant une forme longitudinale munie à sa partie inférieure 46a d'un filetage permettant une fixation solide dans un taraudage prévu dans le fond de la bâche 12.

L'appui axial 46 comporte à sa partie supérieure 46b un pivot de forme sensiblement cylindrique lisse introduit dans le palier 39 et qui s'amincit en direction de l'extrémité supérieure dudit appui après un rétrécissement de section.

Le palier 39 comporte une forme interne qui reproduit le profil de l'appui et donc qui a une section réduite en direction du fond dudit palier.

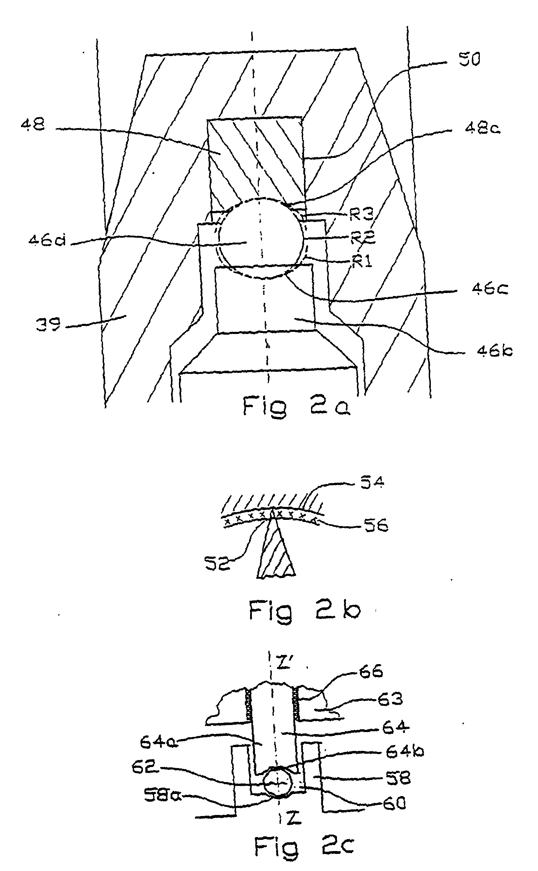

L'extrémité supérieure de l'appui axial 46 présente une surface concave 46c dirigée vers le haut (Fig.2a) prévue pour recevoir une bille 46d.

La surface concave est par exemple de forme sphérique (Fig.2a) de rayon de courbure R1 supérieur au rayon de courbure R2 de la bille.

Au fond du palier 39 une pièce 48, par exemple en carbure de tungstène, est montée dans un logement 50 et présente une surface concave 48a prévue pour recevoir la bille 46d.

La surface concave 48a est par exemple de forme sphérique de rayon de courbure R3 supérieur à celui R2 de la bille.

Par exemple, la bille a un rayon R2 égal à 1,5mm et est réalisée en acier inoxydable. Pour que la bille soit en contact ponctuel avec chacune des surfaces concaves 46c, 48a et ainsi assurer une bonne sensibilité du compteur il faut que les rayons de courbures R1 et R3 de ces surfaces aient des valeurs suffisamment éloignées de la valeur du rayon de R2 de la bille. L'écart minimal entre les valeurs de R1, R3 et celle de R2 ne peut être évalué quantitativement car il dépend de la valeur de R2 et est d'autant plus grand que la valeur de R2 est élevée.

Le choix des valeurs de R1 et R3 peut se faire par tâtonnements en prenant des valeurs de R1 et R3 de plus en plus grandes par rapport à celle de R2 et en surveillant la sensibilité du compteur dans chaque cas après avoir effectué des tests d'endurance.

Le fait que la bille 46d est libre en rotation entre ces deux surfaces permet d'avoir deux contacts ponctuels roulants, c'est-à-dire que les points de contact vont varier au cours du temps et donc l'usure de la bille sera beaucoup moins importante que celle d'une pointe fine de l'art antérieur.

Après un mouvement de pivotage prolongé de la turbine 16 sur l'appui 46, les contacts inférieur et supérieur entre la bille et les surfaces concaves seront donc toujours ponctuels, garantissant ainsi le maintien de la sensibilité du compteur dans le temps.

Dans cet exemple de réalisation, la densité moyenne de la turbine 16 est supérieure à la densité de l'eau.

Le poids de la turbine dans l'eau est par exemple égal à 4 grammes, R1 et R3 étant par exemple égaux entre eux et d'une valeur égale à 2,1mm, le rayon de la bille R2 étant égal à 1,5mm.

Si la turbine était plus lourde, les valeurs de R1 et R3 pourraient être largement augmentées.

Les valeurs des rayons R1 et R3 sont en effet déterminées en fonction du poids de la turbine dans l'eau afin de s'assurer que l'on conserve un auto centrage de la bille entre ces surfaces.

Si l'on ne tient pas compte du poids de la turbine pour choisir les valeurs des rayons R1 et R3, on risque de choisir des valeurs trop élevées pour un poids de turbine dans l'eau trop faible et, ainsi, au cours du pivotage, la bille peut être décentrée par rapport à sa position initiale. Le palier 39 de la turbine 16 viendrait alors en contact avec une génératrice de la partie 46b de l'appui, ce qui induirait des frottements non négligeables et donc une diminution de la sensibilité du compteur au débit considéré.

Il faut remarquer que si les surfaces en contact avec la bille étaient planes au lieu d'être concaves, quel que soit le poids de la turbine dans l'eau, le phénomène d'autocentrage n'existerait pas. la bille pourrait aller contre la surface interne du palier 39 et créerait des contacts supplémentaires s'ajoutant aux deux contacts ponctuels initialement prévus, induisant par là même des frottements additionnels.

Dans un tel cas, ces frottements s'ajouteraient à ceux générés par le contact entre le palier 39 de la turbine 16 et la partie 46b de l'appui 46.

Inversement, si les surfaces concaves avaient à peu prés le même rayon de courbure que celui de la bille, les contacts ponctuels supérieur et inférieur ne pourraient être réalisés et seraient remplacés par des contacts surfaciques supérieur et inférieur, voire même latéraux, qui induiraient des frottements importants et donc une diminution de la sensibilité du compteur.

Il convient de remarquer qu'au lieu de prévoir une pièce supplémentaire 48 au fond du palier 39, on pourrait se contenter d'usiner ou de mouler la surface 48a dans le fond dudit palier.

Durant le transport des compteurs de l'art antérieur, ceux-ci sont soumis à des chocs intempestifs répétés et, lors de ces chocs, la turbine vient heurter la pointe fine de l'appui ce qui a pour effet de provoquer un matage de celle-ci. La pointe s'use donc avant même d'être utilisée pour le pivotage de la turbine et la sensibilité du compteur se trouve ainsi initialement dégradée.

Avec l'invention, le risque de dégradation de la sensibilité du compteur est considérablement réduit de par le fait que l'on n'a plus une pointe fine relativement fragile mais une bille et ce, d'autant plus, que le point de contact de la bille sur lequel le matage va avoir lieu ne sera probablement pas celui qui sera utilisé par la suite lors du pivotage de la turbine.

Par ailleurs, lorsque le compteur d'eau est utilisé avec des eaux très chargées en particules minérales celles-ci se déposent dans les moindres recoins du compteur et, par exemple, là où a lieu le pivotage de la turbine.

La figure 2b est une vue simplifiée agrandie montrant les effets de l'encrassement de la zone où a lieu le pivotage de la turbine dans un compteur de l'art antérieur.

Comme le point de contact entre la pointe fine 52 et la surface concave 54 en regard du palier de la turbine est fixe, les particules s'accumulent autour de ladite pointe sur la surface et, après de nombreuses heures de fonctionnement dans des eaux chargées, finissent par former une couche 56 qui va augmenter les frottements avec la pointe de l'appui et donc affecter la sensibilité du compteur.

Étant donné qu'avec l'invention la bille 46d est libre en rotation entre les surfaces concaves 46c et 48a, elle va se déplacer légèrement entre celles-ci sous l'effet de vibrations diverses et/ou de faibles soulèvements de la turbine et/ou de déplacements radiaux de celle-ci et donc le mouvement de la bille va en quelque sorte empêcher l'accrochage des particules minérales véhiculées par l'eau sur lesdites surfaces.

Comme représenté à la figure 2c, selon une variante de réalisation, une pièce 58 formant saillie par rapport au fond de la chambre de mesure et de forme extérieure essentiellement cylindrique possède un logement cylindrique 60 au fond duquel une surface concave 58a est aménagée afin de servir de support à une bille 62.

La turbine 63 partiellement représentée comporte un arbre axial 64 aligné avec l'axe ZZ' de rotation de celle-ci et solidement fixé à ladite turbine.

L'arbre 64 pénètre partiellement dans le logement 60 et repose sur la bille 62 qui, avec la surface concave 58a, constituent un appui pour le pivotage de la turbine.

L'arbre 64 présente à sa partie inférieure 64a en contact avec la bille une surface concave 64b.

Les deux surfaces concaves présentent les caractéristiques énoncées plus haut en référence aux figures 1 et 2a.

Il convient de noter que lorsque la densité moyenne de la turbine est inférieure à la densité de l'eau les agencements montrés dans les exemples de réalisation des figures 2a et 2c sont disposés au dessus de la turbine dans l'ordre inverse de celui indiqué sur les figures respectives, c'est-à-dire que pour l'agencement de la figure 2a la surface 48a sera placée sous la bille 46d et celle-ci sera disposée sous la pièce allongée 46a, b.

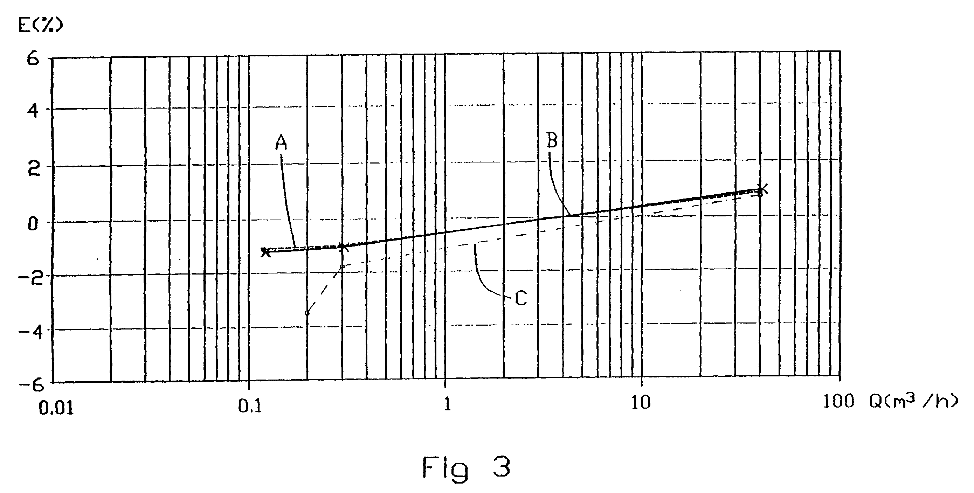

L'efficacité de l'invention est illustrée par la figure 3 où deux courbes d'erreur A et B indiquent respectivement l'erreur E en pourcentage obtenue sur le débit Q mesuré par un compteur d'eau de débit nominal égal à 20 m³/h tel que celui représenté à la figure 1 avant et après avoir effectué un test d'endurance de 825 heures à un débit égal à 3 m³/h.

Ce test consiste à accélérer le phénomène d'usure du pivot.

Ainsi, les deux courbes sont sensiblement identiques ce qui montre que quel que soit le débit le compteur conforme à l'invention a conservé sa sensibilité après un mouvement de pivotage prolongé de la turbine 16 sur l'appui 46.

La courbe A correspond également à la courbe d'erreur obtenue avant test d'endurance avec un compteur d'eau tel que celui représenté à la figure 1 où le pivotage s'effectue non plus avec la bille mais par l'intermédiaire d'une pointe fine en contact avec une surface concave (art antérieur).

Par contre, une troisième courbe d'erreur C indique l'erreur obtenue sur le débit mesuré par le compteur d'eau de l'art antérieur après avoir subi le test précité et montre une très nette dégradation de la sensibilité du compteur.

Il convient de remarquer que le compteur d'eau décrit en référence à la figure 2a fonctionne de la manière indiquée dans le brevet européen n°0 170 564, c'est-à-dire qu'à partir d'une certaine valeur du débit la turbine se soulève et la surface 48a ne se trouve alors plus en contact avec la bille.

Sur des compteurs classiques cela permet d'éviter que la turbine ne repose sur la fine pointe conique à grande vitesse de rotation, donc de limiter l'usure de ladite pointe, et ainsi de conserver une bonne sensibilité lorsque le débit est élevé.

Avec ce type de compteur le déplacement axial de la turbine doit être suffisamment grand pour que les vibrations axiales de ladite turbine, lorsqu'elle se trouve en position haute, ne provoquent pas des chocs répétés entre la surface concave de celle-ci et la fine pointe conique de l'appui qui pourraient dégrader les performances du compteur.

L'invention diminuant considérablement les effets de ce type, le déplacement axial de la turbine peut ainsi être réduit.

Cette caractéristique présente un avantage considérable.

En effet, lorsque la turbine se soulève à partir d'une certaine valeur du débit, la courbe traduisant les erreurs obtenues sur le débit mesuré peut présenter au voisinage de la valeur du débit pour laquelle le soulèvement a lieu un palier d'autant plus important que la course de la turbine est grande. En raison de ce palier, les erreurs obtenues sur la courbe avant le « débit de soulèvement» et celles obtenues après ce débit peuvent afficher un écart important ce qui a pour conséquence que la courbe d'errreur du compteur peut présenter des erreurs inacceptables compte tenu des applications envisagées pour certaines valeurs de débits de la gamme du compteur.

La réduction de la course axiale de la turbine permet justement de réduire l'écart entre les erreurs obtenues sur la courbe avant et après le « débit de soulèvement » et donc d'améliorer la métrologie du compteur.

L'invention s'applique à tout compteur de liquide à turbine d'axe vertical et notamment à un compteur de liquide de type Woltmann dans lequel l'écoulement de liquide met en rotation une turbine, encore appelée hélice, en arrivant dans la chambre de mesure en dessous de ladite turbine et en sortant de ladite chambre au dessus de la turbine.

Que le compteur de liquide soit de type à jet unique, à jets multiples ou de type Woltmann, l'invention s'applique aussi bien dans le cas où l'on a un entraînement mécanique entre la turbine et le totalisateur que dans celui où l'entraînement est réalisé au moyen d'aimants.

L'invention s'applique à tout type de compteurs de liquides, tels que des compteurs d'eau, de liquides industriels ou alimentaires.....

## Revendications

1. Compteur de liquide (10) comprenant une chambre de mesure (14) dans laquelle une turbine (16) est animée d'un mouvement de rotation autour d'un axe (ZZ') et pivote, au moins pour les faibles débits de liquide, sur un appui (46a-d) aligné avec ledit axe, **caractérisé en ce que** le mouvement de pivotage s'effectue par l'intermédiaire d'une bille (46d) libre en rotation et libre de se mouvoir latéralement entre deux surfaces concaves (46c, 48a) de sorte que ladite bille se centre automatiquement, chaque surface concave ayant un rayon de courbure strictement supérieur à celui de la bille, l'une (48a) des surfaces concaves étant liée à la turbine (16) alors que l'autre surface (46c) est solidaire de l'appui (46a-d).

2. Compteur de liquide selon la revendication 1, dans lequel la limite supérieure des rayons de courbure des surfaces concaves (46c, 48a) est déterminée par le poids de la turbine (16) dans le liquide de façon à ce que les rayons de courbure soient d'autant plus grands que le poids de la turbine dans le liquide est élevé.

3. Compteur de liquide selon l'une des revendications précédentes. dans lequel les surfaces concaves (46c, 48a) ont toutes deux une forme sensiblement sphérique.

4. Compteur de liquide selon l'une des revendications 1 à 2, dans lequel les surfaces concaves ont toutes deux une forme sensiblement parabolique.

5. Compteur de liquide selon l'une des revendications 1 à 2, dans lequel les surfaces concaves ont toutes deux une forme sensiblement elliptique.

6. Compteur de liquide selon l'une des revendications précédentes, dans lequel les surfaces concaves (46c, 48a) ont toutes deux le même rayon de courbure.

7. Compteur de liquide selon l'une des revendications précédentes, dans lequel la bille (46d) est placée sous la turbine (16) lorsque la densité moyenne de celle-ci est supérieure à la densité du liquide.

8. Compteur de liquide selon l'une des revendications 1 à 6, dans lequel la bille (46d) est placée au dessus de la turbine (16) lorsque la densité moyenne de celle-ci est inférieure à la densité du liquide.

9. Compteur de liquide selon la revendication 1 et la revendication 7 ou 8, dans lequel un logement axial (39) est prévu dans la turbine (16) pour recevoir l'appui constitué de la bille (46d) et d'un pivot axial (46a-c) qui est muni, à une de ses extrémités qui pénètre dans ledit logement, d'une (46c) des surfaces concaves destinée à entrer en contact avec la bille, l'autre surface concave (48a) étant aménagée au fond dudit logement axial.

10. Compteur de liquide selon la revendication 1 et la revendication 7 ou 8, dans lequel un arbre axial (64) solidaire de la turbine (63) pénètre dans un logement axial (60) au fond duquel est aménagée l'une (58a) des surfaces concaves, ledit arbre axial étant muni, à l'une de ses extrémités pénétrante, de l'autre surface concave (64b), la bille (62) étant disposée dans ledit logement entre ces surfaces.

## Patentansprüche

1. Flüssigkeitszähler (10), umfassend eine Messkammer (14), in der eine Turbine (16) durch eine Drehbewegung um eine Achse (ZZ') bewegt wird und zumindest für geringe Flüssigkeitsdurchsätze auf einem Stützpunkt (46a-d) verschwenkbar ist, der auf die Achse ausgerichtet ist, **dadurch gekennzeichnet, dass** die Verschwenkbewegung über eine Kugel (46d) erfolgt, die sich frei drehen und sich frei seitlich zwischen zwei konkaven Flächen (46c, 48a) bewegen kann, so dass die Kugel sich automatisch zentriert, wobei jede konkave Fläche einen Krümmungsradius aufweist, der absolut größer ist als der der Kugel, wobei eine (48a) der konkaven Flächen mit der Turbine (16) verbunden ist, während die andere Fläche (46c) mit dem Stützpunkt (46a-d) einstückig ist.

2. Flüssigkeitszähler nach Anspruch 1, bei dem die obere Grenze der Krümmungsradien der konkaven Flächen (46c, 48a) durch das Gewicht der Turbine (16) in der Flüssigkeit derart bestimmt wird, dass die Krümmungsradien desto größer sind je höher das Gewicht der Turbine in der Flüssigkeit ist.

3. Flüssigkeitszähler nach einem der vorhergehenden Ansprüche, bei dem die konkaven Flächen (46c, 48a) beide eine im Wesentliche kugelförmige Form haben.

4. Flüssigkeitszähler nach einem der Ansprüche 1 bis 2, bei dem die konkaven Flächen beide eine im Wesentlichen parabolische Form haben.

5. Flüssigkeitszähler nach einem der Ansprüche 1 bis 2, bei dem die konkaven Flächen beide eine im Wesentlichen elliptische Form haben.

6. Flüssigkeitszähler nach einem der vorhergehenden Ansprüche, bei dem die konkaven Flächen (46c, 48a) beide den gleichen Krümmungsradius haben.

7. Flüssigkeitszähler nach einem der vorhergehenden Ansprüche, bei dem die Kugel (46d) unter der Turbine (16) angeordnet ist, wenn die durchschnittliche Dichte der Turbine größer als die Flüssigkeitsdichte ist.

8. Flüssigkeitszähler nach einem der Ansprüche 1 bis 6, bei dem die Kugel (46d) oberhalb der Turbine (16) angeordnet ist, wenn die durchschnittliche Dichte der Turbine kleiner als die Flüssigkeitsdichte ist.

9. Flüssigkeitszähler nach Anspruch 1 und Anspruch 7 oder 8, bei dem eine axiale Aufnahme (39) in der Turbine (16) bereitgestellt wird, um den Stützpunkt aufzunehmen, der aus der Kugel (46d) und einem axialen Drehzapfen (46a-c) besteht, der an einem seiner Enden, das in die Aufnahme eindringt, mit einer (46c) der konkaven Flächen versehen ist, die dazu dient, die Kugel zu berühren, wobei die andere konkave Fläche (48a) auf dem Boden der axialen Aufnahme angebracht ist.

10. Flüssigkeitszähler nach Anspruch 1 und Anspruch 7 oder 8, bei dem eine mit der Turbine (63) einstückige axiale Spindel (64) in eine axiale Aufnahme (60) eindringt, auf deren Boden eine (58a) der konkaven Flächen angebracht ist, wobei die axiale Spindel an einem eindringenden Ende ihrer Enden mit der anderen konkaven Fläche (64b) versehen ist, wobei die Kugel (62) in der Aufnahme zwischen diesen Flächen angeordnet ist.

## Claims

1. Liquid counter (10) comprising a measuring chamber (14) in which a turbine (16) is driven in rotational movement around an axis ZZ' and pivots, at least for low liquid flows, on a support (46a-d) aligned with said axis, **characterised in that** the pivoting movement is carried out through the intermediary of a ball (46d) in free rotation and free to move laterally between two concave surface (46c, 48a), such that said ball centres itself automatically, each concave surface having a radius of curvature strictly greater than that of the ball, one of the concave surfaces, (48a), being linked to the turbine (16) whereas the other surface, (46c), is integral with the support, (46 a-d).

2. Liquid counter according to claim 1, in which the upper limit of the radii of curvature of the concave surfaces (46c, 48a) is determined by the weight of the turbine (16) in the liquid in such a way that the radii of curvature are greater when the weight of the turbine in the liquid is greater.

3. Liquid counter according to any one of the preceding claims, in which the concave surfaces (46c, 48a) both have an approximately spherical shape.

4. Liquid counter according to one or other of claims 1 or 2, in which the concave surfaces both have an approximately parabolic shape.

5. Liquid counter according to one or the other of claims 1 or 2 in which the concave surfaces both have an approximately elliptic shape.

6. Liquid counter according to any one of the preceding claims, in which the concave surfaces (46c, 48a) both have the same radius of curvature.

7. Liquid counter according to any one of the preceding claims, in which the ball (46d) is placed beneath the turbine (16) when the average density of the latter is higher than the density of the liquid.

8. Liquid counter according to any one of claims 1 to 6, in which the ball (46d) is placed above the turbine (16) when the average density of the latter is lower than the density of the liquid.

9. Liquid counter according to claim 1 and claims 7 or 8, in which an axial housing (39) is provided in the turbine (16) to receive the support constituted of the ball (46d) and an axial pivot (46a-c) provided, at one of its ends penetrating said housing, with one (46c) of the concave surfaces intended to come into contact with the ball, the other concave surface (48a) being set at the bottom of said axial housing.

10. Liquid counter according to claim 1 and claims 7 or 8, in which an axial shaft (64) integral with the turbine (63) penetrates an axial housing (60) at the base of which one of the concave surfaces (58a) is set, said axial shaft being provided, at one of its penetrating ends, with the other concave surface (64b), the ball (62) being set in said housing between these surfaces.
